# EUROPÄISCHE PATENTSCHRIFT

(11) **EP 0 436 068 B1**
(45) Veröffentlichungstag und Bekanntmachung des Hinweises auf die Patenterteilung: **10.11.1993**
(21) Anmeldenummer: 90115138.1
(22) Anmeldetag: 07.08.1990
(51) Int. Cl.: B65G 67/60

(54) **Verfahren und Einrichtung zum staubarmen bzw. staubfreien Beladen umschlossener Räume**
Method and device for low-dust or dustless loading of enclosed spaces
Méthode et dispositif pour le chargement, pauvre en poussière ou sans poussière, d'enceintes enfermées

(30) Priorität: 19.12.1989 DE 3941838
(43) Veröffentlichungstag der Anmeldung: 10.07.1991
(73) Patentinhaber: PWH Anlagen + Systeme GmbH, D-66386 St. Ingbert-Rohrbach (DE)
(72) Erfinder: Steckel, Horst, D-6670 St. Ingbert (DE)
(74) Vertreter: John, Ernst

(56) Entgegenhaltungen:
- NL-A- 7 207 013
- US-A- 3 858 733
- US-A- 4 279 556

## Beschreibung

Die Erfindung betrifft ein Verfahren zur staubarmen bzw. staubfreien Beladung umschlossener Räume, insbesondere zum Beladen von Schiffen, indem das Gut über einen Ausleger zugeführt und in ein gegenüber der Horizontalen abknickbares Fallrohr eingebracht wird, wobei das von oben zugeführte Gut mittels einer im unteren Bereich des Fallrohres vorgesehenen Zwangsaustragevorrichtung ausgetragen wird.

Durch die DE-PS 26 56 618 ist eine Vorrichtung zum Löschen von Massengut mit einem Schüttrohr bekannt, dessen freies Auslaufende durch eine Einstellvorrichtung lagenverstellbar ist. Am Auslaufende ist eine unter Druck gegen einen Massengutvorrat arbeitende von einem Motor antreibbare Zwangsaustragevorrichtung in Form einer Förderschnecke sowie mindestens ein Fühler zur Indikation eines am Auslaufende des Schüttrohres herrschenden Massengutdruckes vorgesehen, wobei ein Signal des Fühlers zumindest der Einstellvorrichtung zuführbar ist. Ferner ist ein Höhenstandfühler im Aufnahmeende des Schüttrohres vorgesehen, um den Stand des Massengutes darin abzutasten, der an einen Steuerkreis zum Steuern des Standes des Massengutes im Schüttrohr angeschlossen ist. Das Material wird über einen Ausleger mit Förderband zugeführt und am Abwurfende in ein im wesentlichen senkrechtes teleskopierbares Fallrohr aufgegeben, ehe es in den Bereich der Förderschnecke gelangt. Das freie Ende der Förderschnecke liegt am Auslaufbereich des Fallrohres, wobei das Fallrohr selber ständig auf dem Materialpolster bzw. darin angeordnet ist, so daß die Schnecke unter Ausübung eines vorgegebenen Druckes das auszutragende Material in das vorhandene Materialpolster hineindrückt. Bei Überschreiten eines vorgegebenen Druckes wird über den Fühler ein Anheben des Fallrohres bewerkstelligt.

Die Nachteile dieser Vorrichtung sind im wesentlichen darin begründet, daß eine verhältnismäßig aufwendige Überwachungseinrichtung vorgesehen sein muß, um ein staubarmes bzw. staubfreies Beladen realisieren zu können. Dadurch, daß das Ende des Fallrohres ständig im Material arbeitet und zum Beladen in der Regel kontinuierlich eine Bewegung des Fallrohres in Längsrichtung oder quer zum Schiff stattfinden muß, ist hier ein verhältnismäßig hoher Seitendruck auf das Fallrohr vorhanden, der sich bis zum Ausleger hin auswirken kann. Demzufolge muß eine relativ steife Konstruktion gewählt werden, um den entsprechenden Kräften, die infolge des langen Hebelarmes vom Fallrohrende bis zur Auslegerspitze vorhanden sind, entgegenzuwirken.

Durch das deutsche Gebrauchsmuster 89 07 121 ist eine Einrichtung zum staubfreien Beladen, insbesondere mit schüttförmigen Gütern, bekannt, die mindestens eine Zuführeinrichtung aufweist, die mit einem im wesentlichen vertikal sich erstreckenden, im Bereich der unteren Austrittsöffnung durch mindestens ein Verschlußelement verschließbaren, rohr- oder schlauchförmigen Element zusammenwirkt. Das Verschlußelement ist in Abhängigkeit von dem Gewicht der darauf lastenden Schüttgutsäule im Öffnungssinne betätigbar und bei Reduzierung des Gewichtes selbsttätig verschließbar. Das Verschlußelement ist durch mehrere einseitig gelagerte und sich im wesentlichen radial nach innen erstreckende Klappen gebildet, die durch Federkraft oder durch damit zusammenwirkende Gewichte in ihre Ausgangsposition zurückbewegbar sind. Mit dieser Vorrichtung ist zwar bereits ein staubarmes Beladen möglich, wobei jedoch oberhalb des Materialpolsters eine verhältnismäßig starke Staubentwicklung stattfindet, die u.U. eine größere Entstaubungsanlage erforderlich machen würde. Ferner nachteilig ist, daß infolge schlagartig auftretender Materialströme das Gewicht auch schlagartig auf die feder- oder gewichtsbelasteten Klappen durchschlägt und somit ein ungewollt schnelles Öffnen mit damit verbundener Staubbelastung bewirkt wird.

Die NL-A 7207013 betrifft eine Vorrichtung zum staubarmen Verladen von freifließenden Schüttgütern in Fallrohrleitungen, an deren unterem Ende eine steuerbare Absperrvorrichtung angeordnet ist. Die Absperrvorrichtung ist hierbei zugleich als Austragsvorrichtung, vorzugsweise in Form einer Transportschnecke, ausgebildet. Am eintrittsseitigen Ende der Rohrleitung ist ein Rohreinlaufbehälter mit einem zur Steuerung der Fördergeschwindigkeit der Austragsvorrichtung dienender Maximum- und Minimum-Füllstandsgeber angeordnet. Eine im unteren Bereich des Fallrohres vorgesehene Kammer ist mit einer Entstaubungsanlage verbunden. Nachteilig ist hier festzustellen, daß das Schüttgut unter hohem Staubanteil in das Fallrohr eingebracht wird, wodurch einerseits teure Entstaubungsanlagen notwendig sind und bei nicht ständig gefüllter Austragseinrichtung auch nicht ausgeschlossen werden kann, daß Staub austritt. Ferner tritt das Schüttgut im freien Fall aus relativ großer Höhe aus, so daß auch an dieser Stelle im Aufschlagsbereich mit unerwünschter Staubbildung gerechnet werden muß.

Der US-A 4,279,556 ist ein horizontal angeordneter Schneckenförderer zum Transport landwirtschaftlich einsetzbarer Produkte zu entnehmen, der an einer Seite einen vertikal angeordneten Aufgabetrichter und an der Abgabeseite eine gewlchtsbelastete Verschlußklappe aufweist. Die Schnecke bewegt das zugeführte Schüttgut in Richtung der Abgabeseite, wobei eine Verdichtung des Schüttgutes stattfindet. Das so verdichtete, unter Druck stehende Material betätigt nun die Verschlußklappe im Öffnungssinne, wobei das verdichtete Material strangweise austreten und abbrechen würde, wären im Auslaufbereich nicht umlaufende Messerelemente vorgesehen, die den Strang abschälen würden. Der Schneckenförderer ist hierbei stationär vorgesehen, so daß sich eine Materlalsäule aufbauen würde, sofern das Material nicht abtransportiert wird.

Die Oberbegriffe der Ansprüche 1 und 4 gehen aus von NL-A 7207013.

Der Erfindung liegt die Aufgabe zugrunde, ein Verfahren und eine danach arbeitende Einrichtung zu konzipieren, die in der Lage sind, bei konstruktiv einfachem Aufbau, eine vom Material bzw. der Wichte des Materiales unabhängige Materialgutzufuhr möglichst staubfrei sicher handhaben zu können, wobei gleichzeitig eine definierte Austragsleistung erzielt werden soll. Im Hinblick auf die immer stärker werdenen Umweltschutzbedingungen ist dafür Sorge zu tragen, daß im Austragsbereich die Staubentwicklung möglichst gegen Null zurückgefahren wird, wobei gleichzeitig auf den Einsatz größerer Entstaubungsanlagen verzichtet werden soll.

Diese Aufgabe wird erfindungsgemäß dadurch gelöst, daß das Gut unter Bildung eines Materialpolsters zwischen dem unteren Endbereich der Zwangsaustragevorrichtung und einer im Auslaufbereich des Fallrohres angeordneten Verschlußeinrichtung gegen den Druck der Verschlußeinrichtung stets mit gleichem Abstand zum Boden des umschlossenen Raumes bzw. einer bereits vorhandenen Materialoberfläche ausgetragen wird.

Vorzugsweise wird das Fallrohr, über Fühler gesteuert, ständig zwischen 300 mm und 500 mm über dem Boden bzw. der sich jeweils einstellenden Gutoberfläche gehalten. Der die Zwangsaustragevorrichtung aufnehmende Bereich des Fallrohres ist zum Trimmen, insbesondere von Schiffen, vorzugsweise abknickbar.

Die Vorteile des Erfindungsgegenstandes gegenüber dem St.d.T. sind im wesentlichen darin begründet, daß das Fallrohr nicht im Material arbeitet sondern ständig mit vorgegebener Höhe oberhalb der sich von der Höhe her ständig ändernden Materialoberfläche gehalten bzw. geführt wird. Seitenkräfte, die durch den Materialdruck entstehend würden, sind somit ausgeschlossen. Demzufolge können auch die sich an das Fallrohr anschließenden peripheren Bauteile, wie Ausleger, Portal, Fahrwerke oder dgl. geringer dimensioniert werden, wodurch letztendlich eine preiswertere Fertigung herbeiführbar ist.

Infolge des zwischen der Zwangsaustragevorrichtung und der Verschlußeinrichtung gebildeten Materialpolsters ist durch den Druck der Schnecke einerseits mit einer vorgegebenen Austragsleistung zu rechnen und andererseits wird die Staubbelastung nahezu gegen Null gebracht, da durch das Materialpolster keine staubhaltige Luft mehr vorhanden ist.

Eine nach dem Verfahren arbeitende Einrichtung ist dadurch gekennzeichnet, daß im Auslaufbereich des Fallrohres mindestens eine mechanisch wirkende Verschlußeinrichtung in Verbindung mit mindestens einem mechanischen Fühler angeordnet sind, wobei die Verschlußeinrichtung aus mindestens einer feder-oder gewichtsbelasteten Klappe bzw. mindestens einem Schieber, Zylinder oder Kegel gebildet ist, und daß das Fallrohr in mindestens zwei gelenkig miteinander verbundene Bereiche unterteilt ist, wobei mindestens ein Gelenk außerhalb der Zwangsaustragevorrichtung vorgesehen ist.

Vorteilhafte Weiterbildungen der gegenständlichen Merkmale sind den weiteren Unteransprüchen zu entnehmen.

Die Zwangsaustragevorrichtung kann - wie es beispielsweise in der DE-PS 26 56 618 offenbart ist - aus einer Förderschnecke gebildet sein oder aber durch einen Kratzer gebildet werden, wie er z.B. zum Abtragen von Schüttguthalden zur Anwendung kommt. Der Kratzer weist an Ketten angelenkte Schaufeln auf, die in den beiden Umlenkbereichen über Kettensterne geführt werden. Da das Fallrohr abknickbar ist und somit eine Vielzahl von Positionen innerhalb des umschlossenen Raumes einnehmen kann, erscheint es sinnvoll, die Förderrichtung des Kratzers reversierbar zu gestalten.

Das beispielsweise auf einem Fördergurt zugeführte Material wird an der Abwurftrommel in das abknickbare Fallrohr geworfen und von der im unteren Bereich des Fallrohres angeordneten Zwangsaustragevorrichtung ausgetragen. Das Fallrohr ist vollkommen geschlossen, so daß kein Staub entweichen kann. Die Kippbewegung um eine quer zur Auslegerlängsachse verlaufende Horizontale kann mittels Zahnkranzantrieben bzw. Kettenantrieben durchgeführt werden. Infolge dieser Kippbewegung wird der Vorteil eines kleineren Fahrweges des Vorschubkopfes am Ausleger realisiert. Platzprobleme an den Gurtbahnbogen und Bandumlenkungen sowie Antrieben können somit entfallen.

Am Übergang des einen in den anderen Bereich des Fallrohres kann ein Schwenkwerk mit Kugeldrehverbindung angeordnet werden, um durch diese Maßnahme längs zum Schiff schwenken zu können. Die Schwenkbewegung erfolgt hierbei in beiden Richtungen und zwar um einen Schwenkwinkel von mindestens 180°.

Durch Anordnung eines zusätzlichen Drehwerkes oberhalb des schwenkbaren Fallrohrbereiches besteht weiterhin die Möglichkeit, daß in jede Ecke des umschlossenen Raumes gefördert werden kann. Die Maßnahme ist insbesondere beim Trimmen von Schiffen von Bedeutung. In der Ruhestellung kann das abknick- und schwenkbare Fallrohr hochgeschwenkt werden, so daß sich relativ kleine Windangriffsflächen einstellen. Der Antrieb für die Zwangsaustragevorrichtung ist vorzugsweise an derem oberen Ende in der Nähe des Drehwerkes vorgesehen.

Die die Verschlußeinrichtung bildenden Elemente sind in der Regel ständig geschlossen, so daß ungewollt kein Material austreten kann und öffnen sich nur bei der Förderung soweit, daß Material durchfließen kann und zwar ausschließlich infolge des durch die Zwangsaustragevorrichtung ausgeübten Druckes. Die Federkraft ist vorzugsweise vor Ort einstellbar, um so ohne größere Umbauten unterschiedlichen Materialien gerecht zu werden. Zwischen dem Ende der Zwangsaustragevorrichtung und der Verschlußeinrichtung liegt das bereits angesprochene Materialpolster, welches bei geringerer Förderung das Entweichen von Staub sicher verhindert, was bei voller Leistung bereits durch die Zwangsaustragevorrichtung bewirkt wird.

In der Regel wird bei der Förderung die eingebrachte und gebundene Luft von der Zwangsaustragevorrichtung mit dem Material ausgetragen. Sollte dies in dem einen oder anderen Fall nicht ausreichen, kann in der Nähe des Antriebes ein Staubsack oder ein Staubschlauch angebracht werden, der gleichzeitig das Material wieder in das Fallrohr zurückführt.

Die Erfindung ist anhand eines Ausführungsbeispieles in der Zeichnung dargestellt und wird wie folgt beschrieben. Es zeigen:
- Figur 1: - Schiffsbelader mit abknickbarem Fallrohr
- Figuren 2 und 3: - Teilansicht des Auslegers mit Fallrohr gemäß Figur 1 in verschiedenen Ansichten
- Figur 4: - Teilansicht des Fallrohres mit einer als Kratzer ausgebildeten Zwangsaustragevorrichtung
- Figuren 5 und 6: - verschiedene Ansichten der im Auslaufbereich des Fallrohres vorgesehenen Verschlußeinrichtung

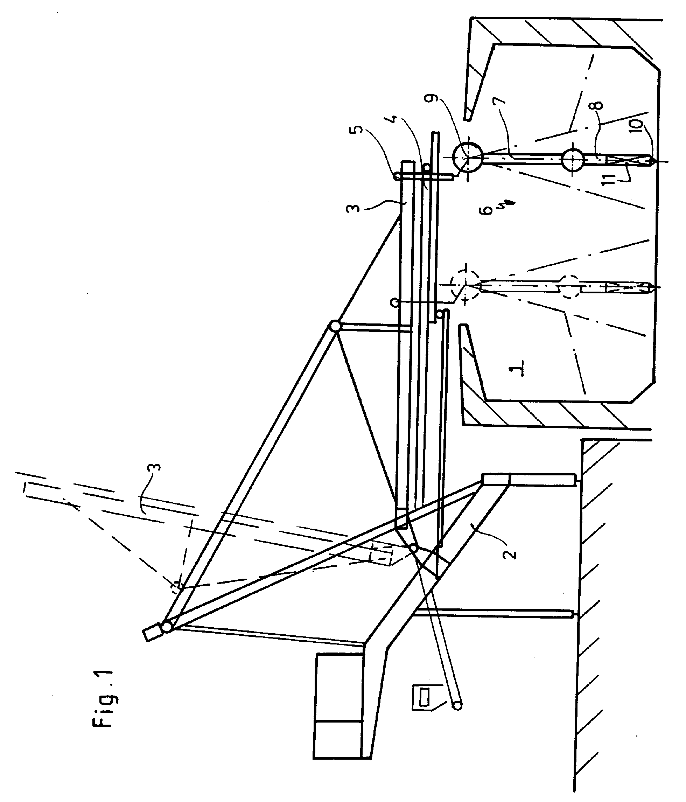

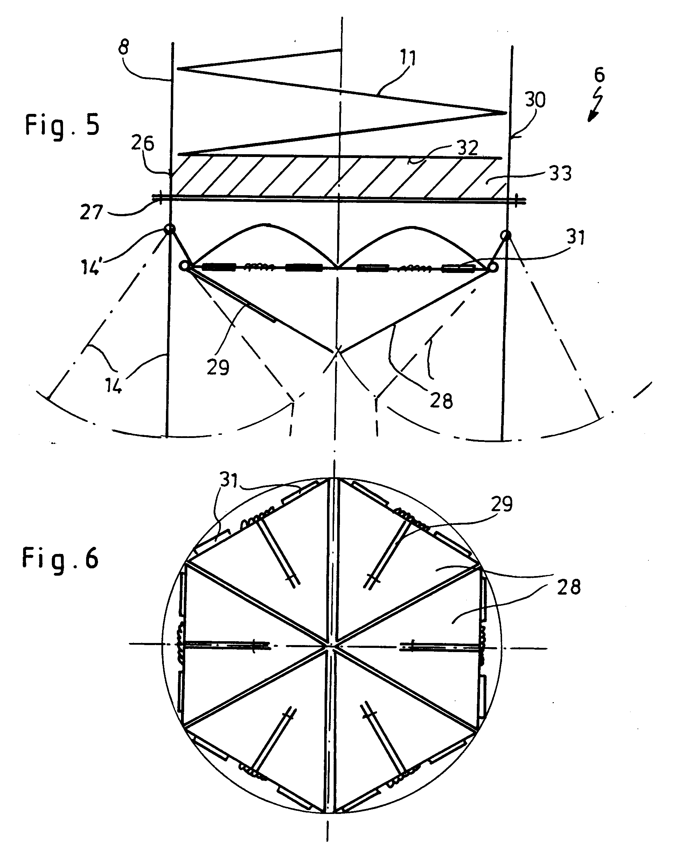

Figur 1 zeigt einen Schiffsbelader, der zum Beladen von Schiffen 1 auf einem verfahrbaren Portal 2 angeordnet ist. Am Portal 2 ist ein heb- und senkbarer Ausleger 3 mit einer Zuführeinrichtung 4 angelenkt. Die Zuführeinrichtung 4 ist mittels eines Vorschubkopfes 5 im Bereich des Auslegers 3 teleskopierbar. Am freien Ende des Auslegers 3 ist ein gegenüber der Horizontalen etwa senkrecht stehendes Fallrohr 6 angeordnet, das in zwei Bereiche 7 und 8 unterteilt ist. Mittels des Vorschubkopfes 5 ist das Fallrohr 6 bis in die gestrichelt dargestellte Position in Auslegerlängsrichtung verfahrbar. Das Fallrohr 6 ist um die Horizontalachse 9 um einen vorgegebenen Winkel schwenkbar und zwar in beiden Richtungen. Im Auslaufbereich des Fallrohres 6 (Bereich 8) ist eine hier nur angedeutete und in den Figuren 5 und 6 näher beschriebene Verschlußeinrichtung 10 vorgesehen. Darüberhinaus weist der Bereich 8 des Fallrohres 6 eine hier ebenfalls nur angedeutete Zwangsaustragevorrichtung 11 auf.

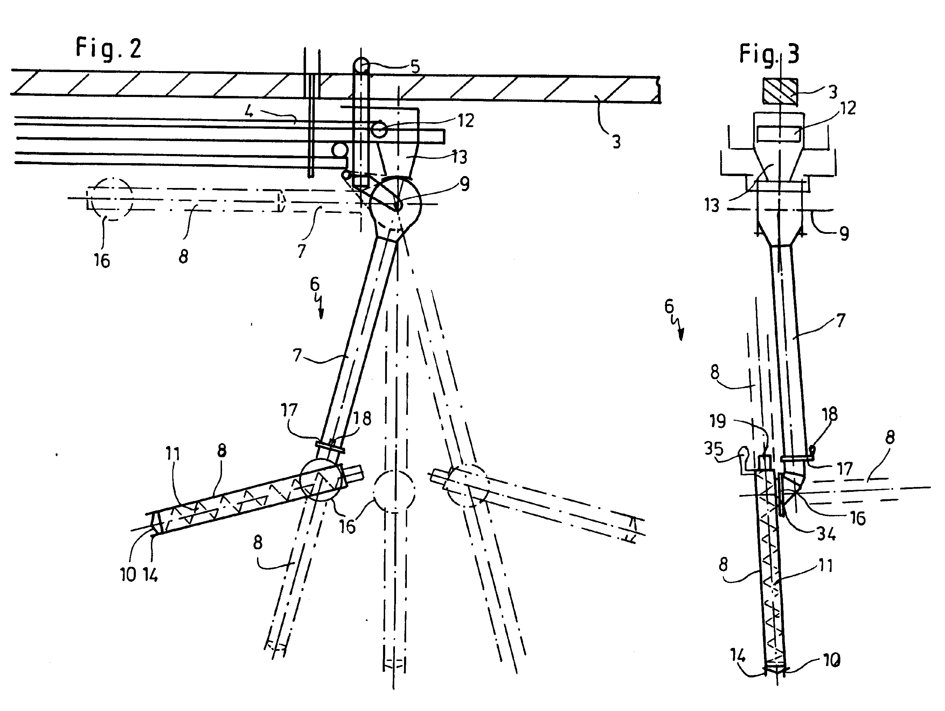

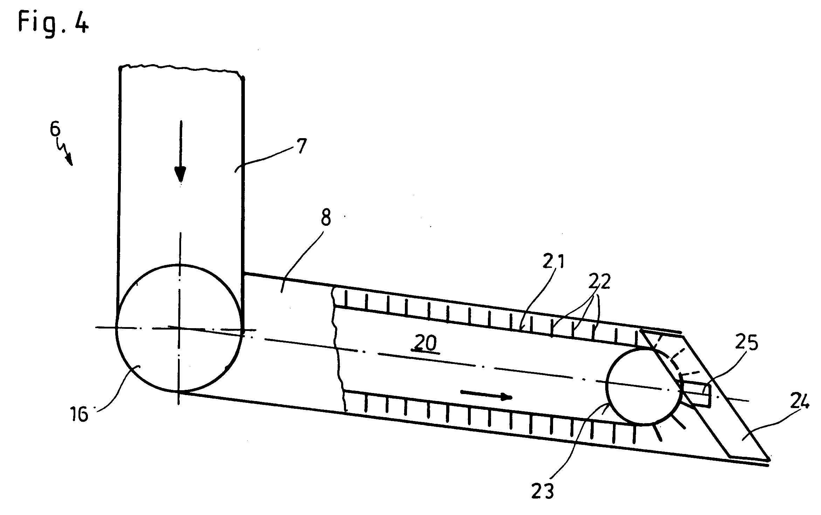

Die Figuren 2 und 3 zeigen jeweils Teilansichten des Auslegers 3 samt Fallrohr 6 und zwar in verschiedenen Ansichten. Erkennbar sind der in Auslegerlängsrichtung verfahrbare Vorschubkopf 5, die Zuführeinrichtung 4 sowie das Fallrohr 6. Wie bereits in Figur 1 angesprochen, ist das Fallrohr 6 in zwei Bereiche 7,8 unterteilt, wobei im Bereich 8 die Zwangsaustragevorrichtung 11 in Form einer Förderschnecke in Verbindung mit der Verschlußeinrichtung 10 angeordnet sind. Das einzuspeichernde Gut wird mittels der Zuführeinrichtung 4 (Förderband) zugeführt und an der Abwurftrommel 12 über die Schurre 13 in den Bereich 7 des Fallrohres 6 eingebracht. Das Fallrohr 6 selber ist nach oben vollständig geschlossen, damit keine staubhaltige Luft nach außen heraustreten kann. Im Bereich der Verschlußeinrichtung 10, die in den Figuren 5 und 6 näher beschrieben ist, sind mechanische Fühler 14 vorgesehen, die dafür Sorge tragen, daß der Bereich 8 des Fallrohres 6 ständig in gleichem Abstand zur sich verändernden Gutoberfläche gehalten wird. In ihrem Anlenkbereich 14' sind die Fühler 14 dergestalt drehbeweglich gelagert, daß sie - egal welche Position das Fallrohr 6 bzw. der Bereich 8 einnimmt - ständig nach unten gerichtet sind. Somit kann in jeder Beladestellung ständig der gleiche Abstand zum Boden eingehalten werden. Der Bereich 7 des Fallrohres 6 ist an seinem freien Ende 15 abgewinkelt ausgebildet und endet in einem Schwenkwerk 16, über welches der Bereich 7 mit dem Bereich 8 des Fallrohres 6 verbunden ist. Oberhalb des abgewinkelten Bereiches 15 ist am Fallrohrteil 7 ein zusätzliches Drehwerk 17 mit Antrieb 18 vorgesehen, mittels welchem dem Bereich 8 des Fallrohres 6 ein weiterer Bewegungsfreiheitsgrad in Umfangsrichtung eingeräumt wird. Der Antrieb 19 für die Förderschnecke 11 befindet sich in deren oberem Bereich, etwa auf Höhe des Drehwerkes 17. Das gesamte Fallrohr 6 kann, wie in Figur 2 dargestellt, mittels des Schwenkwerkes 16 um 180° geschwenkt und um die Horizontalachse 9 geschwenkt in eine Position unterhalb des Auslegers 3 gebracht werden, wobei durch diese Maßnahme die kleinste Windangriffsfläche gebildet wird. Andere Ruhestellungen sind jedoch ebenfalls denkbar. Um eventuell auftretenden Staubproblemen im Eintrittsbereich 34 der Förderschnecke 11 gerecht zu werden, kann hier ein Staubsack 35 vorgesehen werden, wobei der durch die Luftströmung mitgerissene Staub infolge seines Eigengewichtes wieder in die Förderschnecke 8 zurückgeführt wird.

Figur 4 zeigt eine Teilansicht des Fallrohres 6. Erkennbar sind die Bereiche 7 und 8 sowie das Schwenkwerk 16. Im Bereich 8 des Fallrohres 6 ist alternativ zu der in den Figuren 2 und 3 beschriebenen Förderschnecke 11 ein Kratzer 20 als Zwangsaustragevorrichtung vorgesehen. Der Kratzer 20 ist aus mehreren an Ketten 21 angelenkten Schaufeln 22 gebildet, die um Kettensterne 23 umlenkbar sind. Die Verschlußeinrichtung 24 ist hier als schräg geschnittener Zylinder ausgebildet, der - wie nur angedeutet - über Federn 25 in Achsrichtung des Fallrohrbereiches 8 vorgespannt durch den seitens des Kratzers 20 aufgebauten Materialdruck bewegbar ist. Andere Verschlußelemente, wie Kegel, Schieber oder dgl. sind jedoch ebenfalls denkbar.

Die Figuren 5 und 6 zeigen als Ausschnitt den Materialaustritt 26 am Bereich 8 des Fallrohres 6, der durch eine topfartig ausgebildete Verschlußeinrichtung 10 gebildet ist. Die Verschlußeinrichtung 10 wird mittels Schrauben 27 am Materialaustritt 26 befestigt und ist somit jederzeit austauschbar. Die Verschlußeinrichtung 10 wird durch mehrere segmentartig ausgebildete Klappen 28 gebildet, die mit Federn 29 zusammenwirken. Die Klappen 28 sind im Bereich der Mantelfläche 30 des Fallrohrbereiches 8 in Scharnieren 31 gelenkig gelagert. Zwischen dem freien Ende 32 der Förderschnecke 11 (nur angedeutet) und den an sich geschlossenen Klappen 28 ruht eine Schüttgutsäule 33, deren Gewicht allein nicht ausreicht, um die Kraft der Federn 29 im Öffnungssinne zu überwinden. Das so gebildete Materialpolster 33 dient lediglich dazu, keine evtl. durch die Förderschnecke 11 noch mitgerissene Luft im Materialaustragsbereich 26 austreten zu lassen. Erst durch die Förderbewegung der Förderschnecke 11 wird ein solcher Druck im Fallrohrbereich 8, d.h. in der Schüttgutsäule 33 aufgebaut, daß die Klappen 28 gegen den Druck der Federn 29 sich öffnen und das Material staubarm bzw. staubfrei austreten kann. Ferner erkennbar sind die mechanischen Fühler 14, die mit dem Verschlußelement 10 dergestalt zusammenwirken, daß sie in ihren Anlenkpunkten 14' drehbeweglich gelagert sind, und die vorzugsweise eine solche Länge haben, die etwa der maximalen Länge der vollständig geöffneten Klappen 28 entspricht.

## Patentansprüche

1. Verfahren zur staubarmen bzw. staubfreien Beladung umschlossener Räume, insbesondere zum Beladen von Schiffen (1), indem das Gut in ein gegenüber der Horizontalen abknickbares Fallrohr (6) eingebracht wird, wobei das von oben zugeführte Gut mittels einer im unteren Bereich (8) des Fallrohres (6) vorgesehenen Zwangsautragevorrichtung (11) ausgetragen wird, dadurch gekennzeichnet, daß das Gut über einen Ausleger (3) zugeführt und unter Bildung eines Materialpolsters (33) zwischen dem unteren Endbereich (32) der Zwangsaustragevorrichtung (11,20) und einer im Auslaufbereich (26) des Fallrohres (6) angeordneten Verschlußeinrichtung (10,24) gegen den Druck der Verschlußeinrichtung (10,24) stets mit gleichem Abstand zum Boden des umschlossenen Raumes (1) bzw. einer bereits vorhandenen Gutoberfläche ausgetragen wird.

2. Verfahren nach Anspruch 1, dadurch gekennzeichnet, daß das Fallrohr (6), über Fühler (14) gesteuert, ständig zwischen 300 mm und 500 mm über dem Boden bzw. der sich jeweils einstellenden Gutoberfläche gehalten wird.

3. Verfahren nach den Ansprüchen 1 und 2, dadurch gekennzeichnet, daß zumindest der die Zwangsaustragevorrichtung (11,20) aufnehmende Bereich (8) des Fallrohres (6) zum Trimmen, insbesondere von Schiffen (1), abgeknickt wird.

4. Einrichtung zur Durchführung des Verfahrens nach den Ansprüchen 1 bis 3, mit einem gegenüber der Horizontalen abknickbaren Fallrohr (6) sowie einer im unteren Bereich (8) des Fallrohres (6) angeordneten antreibbaren Zwangsaustragevorrichtung (11), wobei das Fallrohr (6) in mindestens zwei gelenkig miteinander verbundene Bereiche (7,8) unterteilt ist, wobei mindestens ein Gelenk (16) außerhalb der Zwangsaustragevorrichtung (11,20) vorgesehen ist, dadurch gekennzeichnet, daß ein eine Zuführeinrichtung aufnehmender Ausleger vorgesehen ist und das Fallrohr am freien Ende des Auslegers vorgesehen ist, und daß im Auslaufbereich (26) des Fallrohres (6) mindestens eine mechanisch wirkende Verschlußeinrichtung (10,24) in Verbindung mit mindestens einem mechanischen Fühler (14) angeordnet ist, wobei die Verschlußeinrichtung (10,24) aus mindestens einer feder- oder gewichtsbelasteten Klappe (28) bzw. mindestens einem Schieber. Zylinder (24) oder Kegel gebildet ist.

5. Einrichtung nach Anspruch 4, dadurch gekennzeichnet, daß der die Zwangsaustragevorrichtung (11,20) aufnehmende Bereich (8) als eigenständiges Bauteil ausgebildet und mit dem sich vertikal nach oben anschließenden nächsten Bereich (7) über ein Schwenkwerk (16) mit einem beidseitigen Schwenkwinkel von mindestens 180° verbunden ist.

6. Einrichtung nach den Ansprüchen 4 und 5, dadurch gekennzeichnet, daß die Zwangsaustragevorrichtung in an sich bekannter Weise als Förderschnecke (11) ausgebildet ist.

7. Einrichtung nach den Ansprüchen 4 und 5, dadurch gekennzeichnet, daß die Zwangsaustragevorrichtung durch einen Kratzer (20) gebildet ist.

8. Einrichtung nach Anspruch 7, dadurch gekennzeichnet, daß die Förderrichtung des Kratzers (20) in Abhängigkeit von der jeweiligen Beladestellung des Fallrohres (6) bzw. dessen Bereichen (7,8) reversierbar ist.

9. Einrichtung nach den Ansprüchen 4 bis 8, dadurch gekennzeichnet, daß der dem Ausleger (3) zugewandte Bereich (7) des Fallrohres (6) um eine quer zur Auslegerlängsachse verlaufende Horizontalachse (9) schwenkbar ist.

10. Einrichtung nach den Ansprüchen 4 bis 9, dadurch gekennzeichnet, daß in einem der Bereiche (7,8) des Fallrohres (6) ein Drehwerk (17) mit Antrieb (18) vorgesehen ist, mittels welchem zumindest der die Zwangsaustragevorrichtung (11,20) aufnehmende Bereich (8) um mindestens 360° in Umfangsrichtung bewegbar ist.

11. Einrichtung nach den Ansprüchen 4 bis 10, dadurch gekennzeichnet, daß der Antrieb (19) für die Förderschnecke (11) an deren oberem Ende, insbesondere im Bereich des Drehwerkes (17) vorgesehen ist.

12. Einrichtung nach den Ansprüchen 4 bis 11, dadurch gekennzeichnet, daß im Bereich des Schwenkantriebes (16) ein Staubsack bzw. ein Staubschlauch vorgesehen ist, der gleichzeitig das Material wieder in das Fallrohr (6) zurückführt.

13. Einrichtung nach Anspruch 4, dadurch gekennzeichnet, daß jeder Fühler (14) an seinem Anlenkpunkt (14') am Fallrohrbereich (8) drehbeweglich aufgehängt ist.

## Claims

1. Method for low-dust or dustless loading of enclosed spaces, in particular for loading ships (1), wherein the goods are placed in a fall tube (6), which is bendable relative to the horizontal, and the goods fed from above are discharged by means of a forced discharge means (11) provided in the lower section (8) of said fall tube (6), characterised in that said goods are delivered by means of a jib (3) and, on formation of a pad of material (33) between the lower end section (32) of said forced discharge means (11, 20) and a locking means (10, 24) arranged in the discharge area (26) of said fall tube (6), said goods are discharged constantly at the same distance from the floor of the enclosed space (1) or of a provided goods area against the pressure of said locking means (10, 24).

2. Method according to Claim 1, characterised in that the fall tube (6) is controlled via sensors (14) and is constantly held between 300 mm and 500 mm above the floor or goods area which adjusts respectively.

3. Method according to Claims 1 and 2, characterised in that at least the section (8) of the fall tube (6) accommodating the forced discharge means (11, 20) is bent over for trimming, particularly in the case of ships (1).

4. Device for implementing the method according to Claims 1 to 3, comprising a fall tube (6), which is bendable relative to the horizontal, and a drivable forced discharge means (11) arranged in the lower section (8) of said fall tube (6), said fall tube (6) being divided into at least two sections (7, 8) articulated to one another, whereby at least one articulation (16) is provided outside said forced discharge means (11, 20), characterised in that a jib accommodating a delivery means is provided, said fall tube being arranged on the free end of said jib; and that in the discharge area (26) of said fall tube (6), at least one mechanically operating locking means (10, 24) is arranged in association with at least one mechanical sensor (14), said locking means (10, 24) being formed from at least one spring-loaded or weighted flap (28) or at least one slide bar, cylinder (24) or cone.

5. Device according to Claim 4, characterised in that the section (8) accommodating the forced discharge means (11, 20) is provided as an independent structural part and is connected to the next adjoining section (7) vertically above it via slewing gear (16) with a slewing angle on both sides of at least 180°.

6. Device according to Claims 4 and 5, characterised in that the forced discharge means is provided in the form of a screw conveyor (11) in a manner known per se.

7. Device according to Claims 4 and 5, characterised in that the forced discharge means is formed by a scraper (20).

8. Device according to Claim 7, characterised in that the transport direction of the scraper (20) may be reversed in relation to the respective loading position of the fall tube (6) or its sections (7, 8).

9. Device according to Claims 4 to 8, characterised in that the section (7) of the fall tube (6) facing the jib (3) may be slewed around a horizontal axis (9) extending transversely to the longitudinal axis of the jib.

10. Device according to Claims 4 to 9, characterised in that turning gear (17) with drive (18) is provided in one of the sections (7, 8) of the fall tube (6), by means of which at least the section (8) accommodating the forced discharge means (11, 20) may be moved by at least 360° in peripheral direction.

11. Device according to Claims 4 to 10, characterised in that the drive (19) for the screw conveyor (11) is arranged at its upper end, in particular in the area of the turning gear (17).

12. Device according to Claims 4 to 11, characterised in that a dust sack or dust pipe is provided in the area of the slewing gear (16) to feed the material simultaneously back into the fall tube (6).

13. Device according to Claim 4, characterised in that each sensor (14) is suspended from the fall tube section (8) so that it may turn at its pivot point (14').

## Revendications

1. Procédé de chargement d'espaces fermés entraînant peu, voire pas de poussières, en particulier de chargement de navires (1), selon lequel la marchandise est introduite dans un tuyau de chute (6) inclinable par rapport à l'horizontale, la marchandise amenée par le dessus étant évacuée au moyen d'un dispositif d'évacuation forcée (11) prévu dans la zone inférieure (8) du tuyau de chute (6), caractérisé en ce que la marchandise est amenée par un bras (3) et évacuée en formant un bouchon de matière (33) entre la zone extrême inférieure (32) du dispositif d'évacuation forcée (11, 20) et un dispositif de fermeture (10, 24) disposé dans la zone de sortie (26) du tuyau de chute (6) contre la pression du dispositif de fermeture (10, 24) toujours avec le même intervalle par rapport au fond de l'espace fermé (1) ou à une surface de marchandises déjà formée.

2. Procédé selon la revendication 1, caractérisé en ce que le tuyau de chute (6), commandé par des palpeurs (14), est maintenu en permanence à une distance de 300 à 500 mm du fond ou de la surface de marchandises en cours de formation.

3. Procédé selon les revendications 1 et 2, caractérisé en ce qu'au moins la zone (8) du tuyau de chute (6) qui contient le dispositif d'évacuation forcée (11, 20) est inclinée pour l'équilibrage, en particulier de navires (1).

4. Dispositif d'exécution du procédé selon les revendications 1 à 3 avec un tuyau de chute (6) inclinable par rapport à l'horizontale ainsi qu'un dispositif d'évacuation forcée (11) pouvant être commandé et disposé dans la zone inférieure (8) du tuyau de chute (6), le tuyau de chute (6) étant divisé en au moins deux zones (7, 8) articulées l'une à l'autre et au moins une articulation (16) se trouvant à l'extérieur du dispositif d'évacuation forcée (11, 20), caractérisé en ce qu'un bras dans lequel est logé un dispositif d'alimentation est prévu, en ce que le tuyau de chute est disposé à l'extrémité libre du bras et en ce qu'au moins un dispositif de fermeture (10, 24) à action mécanique en liaison avec au moins un palpeur mécanique (14) est disposé dans la zone de sortie (26) du tuyau de chute (6), le dispositif de fermeture (10, 24) étant formé d'au moins un clapet (28) chargé par ressort ou par poids ou d'au moins une vanne, un cylindre (24) ou un cône.

5. Dispositif selon la revendication 4, caractérisé en ce que la zone (8) logeant le dispositif d'évacuation forcée (11, 20) est conçue comme une pièce autonome et est fixée à la zone suivante supérieure verticale (7) par une commande de pivotement (16) avec un angle de pivotement d'au moins 180° de part et d'autre.

6. Dispositif selon les revendications 4 et 5, caractérisé en ce que le dispositif d'évacuation forcée est conçu comme une vis sans fin (11) de manière connue.

7. Dispositif selon les revendications 4 et 5, caractérisé en ce que le dispositif d'évacuation forcée est formé par un râcloir (20).

8. Dispositif selon la revendication 7, caractérisé en ce que le sens de transport du râcloir (20) est réversible en fonction de la position de chargement respective du tuyau de chute (6) ou de ses zones (7, 8).

9. Dispositif selon les revendications 4 à 8, caractérisé en ce que la zone (7) du tuyau de chute (6) tournée vers le bras (3) peut pivoter autour d'un axe horizontal (9) perpendiculaire par rapport à l'axe longitudinal du bras.

10. Dispositif selon les revendications 4 à 9, caractérisé en ce que, dans une des zones (7, 8) du tuyau de chute (6), est prévue une commande de pivotement (17) avec entraînement (18), à l'aide de laquelle au moins la zone (8) logeant le dispositif d'évacuation forcée (11, 20) peut se déplacer en direction circonférentielle d'au moins 360°.

11. Dispositif selon les revendications 4 à 10, caractérisé en ce que l'entraînement (19) pour la vis sans fin (11) est prévu à son extrémité supérieure, en particulier dans la zone de la commande de pivotement (17).

12. Dispositif selon les revendications 4 à 11, caractérisé en ce que, dans la zone de l'entraînement pivotant (16) est prévu un sac à poussières ou un flexible à poussières qui ramène simultanément la matière dans le tuyau de chute (6).

13. Dispositif selon la revendication 4, caractérisé en ce que chaque palpeur (14) est suspendu en son point d'articulation (14') dans la zone de tuyau de chute (8) de manière à pouvoir exercer une rotation.
